# EUROPÄISCHE PATENTSCHRIFT

(11) **EP 3 521 674 B1**
(45) Veröffentlichungstag und Bekanntmachung des Hinweises auf die Patenterteilung: **24.11.2021**
(21) Anmeldenummer: 19155200.9
(22) Anmeldetag: 04.02.2019
(51) Int. Cl.: F16L 11/08, B29C 48/21, F16L 11/04, B29C 45/73, B29C 48/09

(54) **VERWENDUNG EINES SCHLAUCHES ZUM TRANSPORT EINES FLUIDES IN FORM EINES KÜHLMITTELS IM ANLAGEN- UND GERÄTEBAU**
USE OF A HOSE FOR TRANSPORTING A FLUID IN FORM OF A COOLANT IN PLANT AND EQUIPMENT CONSTRUCTION
UTILISATION D'UN TUYAU FLEXIBLE POUR LE TRANSPORT D'UN FLUIDE SOUS FORME DE LIQUIDE DE REFROIDISSEMENT DANS LA CONSTRUCTION D'INSTALLATIONS ET D'ÉQUIPEMENTS

(30) Priorität: 05.02.2018 DE 102018102445
(43) Veröffentlichungstag der Anmeldung: 07.08.2019
(73) Patentinhaber: REHAU AG + Co, 95111 Rehau (DE)
(72) Erfinder: Biedermann, Armin, 95131 Scharzenbach am Wald (DE); Müller, Jörg, 95028 Hof (DE); Wendel, Andreas, 95111 Rehau (DE)

(56) Entgegenhaltungen:
- WO-A2-2008/107535
- DE-A1-102015 113 218
- JP-A- 2003 336 773
- US-A- 5 706 865
- US-A1- 2003 145 896
- US-A1- 2004 134 555
- US-A1- 2013 056 107
- US-B1- 9 046 201

## Beschreibung

Die Erfindung betrifft die Verwendung eines Schauches als Kühlmittelschlauch für den Anlagenund Gerätebau, zum Transport eines Fluides mit
- einer ein Polyurethan enthaltenden Tragschicht und
- einer die Tragschicht umgebenden Armierungsschicht.

Derartige Schläuche sind im Stand der Technik bekannt und werden beispielsweise zur Werkzeugkühlung in Maschinen, insbesondere Spritzgussmaschinen eingesetzt. Hierbei werden an die Diffusionsbeständigkeit der Schläuche hohe Anforderungen gestellt. Dies hängt u.a. z.B. bei Spritzugussmaschinen damit zusammen, dass thermisch immer höher belastbare Werkstoffe im Spritzguss verarbeitet werden und damit entsprechend auch die Verarbeitungstemperaturen steigen, wodurch die Diffusionsneigung des Kühlmittels steigt. Diese Entwicklung führt dazu, dass armierte Polyurethanschläuche beim vorgegebenen Einsatzzweck häufig kein akzeptables Diffusionsverhalten mehr zeigen. Dies hat verlängerte Wartungszeiten, Stillstände bis hin zu Maschinenausfällen zur Folge. Zudem werden aus ökonomischen Gründen die Taktzeiten in Spritzgießprozessen stetig kürzer und die Wartungszeiten müssen auf ein Minimum reduziert werden (economic maintenance), um die Ausbringungsmenge und Produktqualität der Spritzlinge auf einem konstant hohen Niveau zu halten. Dadurch müssen auch die im Kühlmittelkreislauf verbauten Schläuche wartungsärmer, d.h. langlebiger und verschleißfester werden. Im Stand der Technik sind thermisch hoch belastbare Silikonschläuche für diese Einsatzzwecke bekannt; diese sind jedoch vergleichsweise teuer und besitzen ebenfalls kein zufriedenstellendes Diffusionsverhalten.

Die US 2013/056107 A1 offenbart die Verwendung eines Schlauches zum Transport von Kältemittel. Der kältemittelfördernde Schlauch wird dadurch produziert, dass eine Gummischicht durch Extrusion deren Materials auf der Außenumfangsfläche einer Harzschicht gebildet wird. Eine Verstärkungsschicht wird durch Flechten von Verstärkungsfäden auf der Außenumfangsfläche der Gummischicht gebildet. Die Harzzusammensetzung enthält halbaromatisches Polyamidharz als Hauptkomponente sowie aliphatisches Polyamidharz und ein Elastomer als dispergierte Komponenten. Ein Beispiel für das Gummimaterial zur Bildung der Gummischicht auf der äußeren Umfangsfläche der Harzschicht ist ein Urethangummi. Die Dicke der Gummischicht ist bevorzugt 1,5 bis 2 mm.

Vor dem beschriebenen Hintergrund liegt der Erfindung die Aufgabe zugrunde, die Verwendung eines Schlauches mit den eingangs beschriebenen Merkmalen anzugeben, wobei der Schlauch der ein verbessertes Diffusionsverhalten zeigt.

Erfindungsgemäß wird diese Aufgabe durch eine Verwendung nach Anspruch 1 gelöst. Erfindungsgemäß ist die Tragschicht innenseitig mit einer Polyamid enthaltenden Diffusionssperrschicht verschweißt. Erfindungsgemäß wurde erkannt, dass die positiven Eigenschaften der Polyurethan enthaltenden Tragschicht weiter genutzt und dabei gleichzeitig die Diffusionsneigung des Schlauch reduziert werden kann, wenn die innere Oberfläche der Tragschicht mit der Polyamid enthaltenden Diffusionssperrschicht gegen ein Durchdiffundieren des zu transportierenden Fluids geschützt wird. Die Verbindung zwischen diesen beiden Schichten erfolgt vorzugsweise durch ein thermisches Verschweißen, beispielsweise im Wege einer Coextrusion. Dies gewährleistet eine hohe Trennfestigkeit der beiden Schichten. Mittels der erfindungsgemäßen Lehre können ein Verlust des zu transportierenden Kühlmediums deutlich reduziert und auch optische Beeinträchtigungen in Form von Ausblühungen oder dergleichen vermieden werden. Aufgrund des besseren Diffusionswiderstandes kann ferner der Schlauch mit höheren Drücken beaufschlagt und somit die Durchflussmenge des Kühlmediums erhöht werden. Dies hat einen besseren Kühleffekt zur Folge und ermöglicht auch den Einsatz des Schlauches in leistungsfähigeren Anlagen bzw. Geräten. Ferner gewährleistet der erfindungsgemäße Aufbau des Schlauches eine hohe Flexibilität und ermöglicht hierdurch die Verlegung mit sehr engen Biegeradien. Außerdem besitzt Polyamid eine sehr gute Medienbeständigkeit gegenüber den gängigen Kühlmitteln. Zweckmäßigerweise bildet die Diffusionssperrschicht die innerste Schicht des Schlauches. Im Rahmen der Erfindung liegt es ferner, dass die Tragschicht aus Polyamid besteht.

Erfindungsgemäß weist Tragschicht eine Härte Shore A 70 bis 80 auf. Die Härte Shore A wird vorzugsweise gemäß UNI EN ISO 688 gemessen. Die Armierungsschicht kann aus gewickelten und / oder geflochtenen Fäden und / oder Filamenten gebildet sein. Hierdurch wird die Druckbelastbarkeit des Schlauches gegenüber unarmierten Ausführungsformen wesentlich verbessert, so dass beispielsweise Betriebsdrücke zur Führung des Fluides von 10 bar ü problemlos realisiert werden können.

Gemäß einer bevorzugten Ausführungsform der Erfindung ist die Armierungsschicht von einer polymeren, vorzugsweise Polyurethan enthaltenden Schutzschicht umgeben. Insbesondere kann die Schutzschicht aus Polyurethan bestehen. Die Schutzschicht kann eine Härte Shore A von 60 bis 90, insbesondere 70 bis 80 aufweisen. Zweckmäßigerweise ist/sind die Tragschicht und/oder die Diffusionssperrschicht und/oder die Schutzschicht als Extrusionsschicht ausgebildet.

Wie bereits erläutert, wird der Schlauch erfindungsgemäß zum Transport von Kühlmitteln im Anlagen- und Gerätebau, insbesondere in Spritzgussmaschinen eingesetzt. Bei diesen Kühlmitteln handelt es sich insbesondere um Wasser, Luft oder Öl.

Im Folgenden wird anhand einer lediglich ein Ausführungsbeispiel darstellenden Zeichnung ausführlich erläutert. Es zeigen schematisch:
- Fig. 1: einen Schlauch ausschnittsweise in einer Seitenansicht, und
- Fig. 2: den in Fig. 1 gezeigten Schlauch in einer Querschnittsdarstellung.

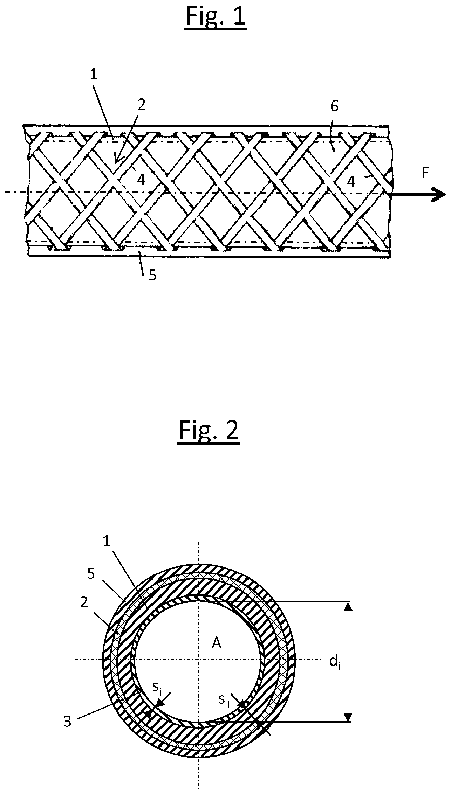

Die Fig. 1 und 2 zeigen einen Kühlmittelschlauch 1, der zum Transport eines flüssigen Kühlmittels F in einer (nicht dargestellten) Spritzgussmaschine vorgesehen ist. Der Schlauch 1 weist eine aus Polyurethan bestehende Tragschicht 1 und eine die Tragschicht 1 umgebenden Armierungsschicht 2 auf. Die Tragschícht 1 ist innenseitig mit einer (in Fig. 1 nicht dargestellten) Diffusionssperrschicht 3 aus Polyamid durch Coextrusion thermisch verschweißt. Die Diffusionssperrschicht 3 bildet die innerste Schicht des Schlauches. Die Armierungsschicht 2 ist aus offen geflochtenen Fäden 3 gebildet, so dass zwischen den Fäden Freiräume 4 verbleiben. Der Innendurchmesser dᵢ der den freien Strömungsquerschnitt A definierenden Diffusionssperrschicht 3 beträgt 5 bis 30 mm, zum Beispiel 10 bis 20 mm. Die Schichtdicke S_{T} der Tragschicht 1 beträgt erfindungsgemäß 1 bis 3 mm. Die Schichtdicke Sᵢ der Diffusionssperrschicht 3 beträgt 0,1 bis 2 mm, z.B. 0,5 bis 1 mm.

Die Armierungsschicht 2 ist von einer polymeren Extrusions-Schutzschicht 5 umgeben, die ebenfalls aus Polyurethan besteht. Sowohl die Tragschicht 1 als auch die Schutzschicht 5 weisen jeweils eine Härte Shore A im Bereich von 70 bis 80 auf.

## Patentansprüche

1. Verwendung eines Schlauches mit
- einer ein Polyurethan enthaltenden Tragschicht (1) und
- einer die Tragschicht (1) umgebenden Armierungsschicht (2),
- wobei die Tragschicht (1) innenseitig mit einer Polyamid enthaltenden Diffusionssperrschicht (3) verschweißt ist,
- wobei die Tragschicht (1) eine Härte Shore A von 70 bis 80 sowie eine Schichtdicke S_{T} von 1 bis 3 mm aufweist,
zum Transport eines Fluides in Form eines Kühlmittels (F) im Anlagen- und Gerätebau.

2. Verwendung nach Anspruch 1, **dadurch gekennzeichnet, dass** die Diffusionssperrschicht (3) die innerste Schicht des Schlauches bildet.

3. Verwendung nach Anspruch 1 oder 2, **dadurch gekennzeichnet, dass** die Armierungsschicht (2) aus gewickelten und / oder geflochtenen Fäden (4) und / oder Filamenten gebildet ist.

4. Verwendung nach einem der Ansprüche 1 bis 3, **dadurch gekennzeichnet, dass** die Armierungsschicht (2) außenseitig von einer polymeren, vorzugsweise Polyurethan enthaltenden Schutzschicht (5) umgeben ist.

5. Verwendung nach einem der Ansprüche 1 bis 4, **dadurch gekennzeichnet, dass** die Tragschicht (1) aus Polyurethan besteht.

6. Verwendung nach einem der Ansprüche 1 bis 5, **dadurch gekennzeichnet, dass** die Diffusionssperrschicht (3) aus Polyamid besteht.

7. Verwendung nach einem der Ansprüche 1 bis 6, **dadurch gekennzeichnet, dass** die Tragschicht (1) und/oder die Diffusionssperrschicht (3) und/oder die Schutzschicht (5) als Extrusionsschicht ausgebildet ist/sind.

## Claims

1. Use of a hose with
- a support layer (1) containing a polyurethane and
- a reinforcing layer (2) surrounding the support layer (1),
- wherein the support layer (1) is welded internally to a polyamide-containing diffusion barrier layer (3),
- wherein the support layer (1) has a Shore A hardness of 70 to 80 and a layer thickness S_{T} of 1 to 3 mm,
for transporting a fluid in the form of a coolant (F) in plant and equipment construction.

2. Use according to claim 1, **characterised in that** the diffusion barrier layer (3) forms the innermost layer of the hose.

3. Use according to claim 1 or 2, **characterised in that** the reinforcing layer (2) is formed from wound and/or braided threads (4) and/or filaments.

4. Use according to one of claims 1 to 3, **characterised in that** the reinforcing layer (2) is surrounded externally by a polymeric, preferably polyurethane-containing, protective layer (5).

5. Use according to one of claims 1 to 4, **characterised in that** the support layer (1) consists of polyurethane.

6. Use according to one of claims 1 to 5, **characterised in that** the diffusion barrier layer (3) consists of polyamide.

7. Use according to one of claims 1 to 6, **characterised in that** the support layer (1) and/or the diffusion barrier layer (3) and/or the protective layer (5) is/are configured as an extruded layer.

## Revendications

1. Utilisation d'un tuyau flexible comportant
- une couche de support (1) contenant un polyuréthane et
- une couche de renforcement (2) entourant la couche de support (1),
- la couche de support (1) étant soudée sur le côté intérieur à une couche de barrière de diffusion (3) contenant du polyamide,
- la couche de support (1) présentant une dureté Shore A de 70 à 80, ainsi qu'une épaisseur de couche S_{T} de 1 à 3 mm,
pour le transport d'un fluide sous forme de liquide de refroidissement (F) dans la construction d'installations et d'équipements.

2. Utilisation selon la revendication 1, **caractérisée en ce que** la couche de barrière de diffusion (3) forme la couche la plus intérieure du tuyau flexible.

3. Utilisation selon la revendication 1 ou 2, **caractérisée en ce que** la couche de renforcement (2) est formée par des fils (4) et/ou des filaments enroulés et/ou tressés.

4. Utilisation selon l'une des revendications 1 à 3, **caractérisée en ce que** la couche de renforcement (2) est entourée sur le côté extérieur d'une couche de protection (5) polymère contenant de préférence du polyuréthane.

5. Utilisation selon l'une des revendications 1 à 4, **caractérisée en ce que** la couche de support (1) est constituée de polyuréthane.

6. Utilisation selon l'une des revendications 1 à 5, **caractérisée en ce que** la couche de barrière de diffusion (3) est constituée de polyamide.

7. Utilisation selon l'une des revendications 1 à 6, **caractérisée en ce que** la couche de support (1) et/ou la couche de barrière de diffusion (3) et/ou la couche de protection (5) est/sont réalisée(s) sous la forme d'une couche extrudée.
